# EUROPÄISCHE PATENTSCHRIFT

(11) **EP 2 603 740 B1**
(45) Veröffentlichungstag und Bekanntmachung des Hinweises auf die Patenterteilung: **24.06.2020**
(21) Anmeldenummer: 11736335.8
(22) Anmeldetag: 19.07.2011
(51) Int. Cl.: F24C 7/08, H04M 1/725

(54) **HAUSGERÄT ZUM ZUBEREITEN VON LEBENSMITTELN MIT EINER KOMMUNIKATIONSSCHNITTSTELLE**
DOMESTIC APPLIANCE FOR PREPARING FOOD HAVING A COMMUNICATION INTERFACE
APPAREIL MÉNAGER SERVANT À PRÉPARER DES ALIMENTS ET DOTÉ D'UNE INTERFACE DE COMMUNICATION

(30) Priorität: 09.08.2010 DE 102010039058
(43) Veröffentlichungstag der Anmeldung: 19.06.2013
(73) Patentinhaber: BSH Hausgeräte GmbH, 81739 München (DE)
(72) Erfinder: GRÄTZ, Franz, 83374 Traunwalchen (DE); KOJER, Mario, 83342 Tacherting (DE)
(86) Internationale Anmeldenummer: PCT/EP2011/062380
(87) Internationale Veröffentlichungsnummer: WO 2012/019886

(56) Entgegenhaltungen:
- EP-A1- 1 752 712
- EP-A2- 1 239 703
- WO-A1-02/086219
- WO-A1-2004/052167
- WO-A1-2007/138379
- DE-U1-202006 008 658
- JP-A- 2001 343 128
- US-A1- 2006 202 848
- US-A1- 2010 182 136

## Beschreibung

Die Erfindung betrifft ein Hausgerät zum Zubereiten von Lebensmitteln, mit einer Kommunikationsschnittstelle, mittels welcher das Hausgerät zur drahtlosen Kommunikation mit einer hausgeräteexternen Einheit ausgebildet ist.

Eine derartige Ausgestaltung eines Hausgeräts ist beispielsweise aus der DE 10 2004 008 335 A1 bekannt. Dort sollen jedoch lediglich EDV-Programme und Daten von einer externen Einrichtung in den Schreib- und Lesespeicher des Hausgeräts eingelesen sowie umgekehrt ausgelesen werden können. Diese sollen dann für eine Fehleranalyse des Geräts herangezogen werden. Diese Einrichtung kann ein Personalcomputer oder ein Laptop sein. Die Schnittstelle ist drahtlos ausgebildet und ist mit der externen Einrichtung koppelbar. Insbesondere soll die Schnittstelle eine Infrarot-Signalverbindung sein. Ein derartiger Typ einer Schnittstelle ist jedoch nur sehr eingeschränkt nutzbar.

Aus der US 2006/0202848 A1 ist ein Warnsystem bekannt, bei welchem ein Hausgerät zum Zubereiten von Lebensmitteln mit einer Kommunikationsschnittstelle versehen ist, über welche ein Signal an eine externe Warneinheit ausgesendet wird, wenn der Herd in Betrieb ist. Insbesondere wird das Signal hier drahtlos an die Warneinheit übertragen. Aus der WO 2007/138379 A1 ist ein Elektrogerät bekannt, welches über eine Schnittstelle zur drahtlosen Kommunikation mit einem externen Gerät, beispielsweise einem Handy, verfügt.

Aus der EP 1 239 703 A2 ist ein Kochtopf bekannt. Über einen Deckel des Kochtopfs ist ein Küchenutensil in das Innere des Kochtopfs einführbar. Durch dieses Küchenutensil ist eine drahtlose Kommunikation mit topfexternen Einheiten möglich, insbesondere durch den Austausch von Funksignalen.

Weiterer Stand der Technik ist aus den Dokumenten US 2010/182136 A1, WO 02/086219 A1 und WO 2004/052167 A1 bekannt.

Es soll ein Hausgerät geschaffen werden, welches im Hinblick auf die Kommunikation mit einer hausgeräteexternen Einheit verbessert ist.

Diese Aufgabe wird durch ein Hausgerät, ein Adaptermodul und eine hausgeräteexterne Einheit, welche die Merkmale nach Anspruch 1 aufweisen, gelöst.

Ein erfindungsgemäßes Hausgerät zum Zubereiten von Lebensmitteln umfasst zumindest eine Kommunikationsschnittstelle, mittels welcher das Hausgerät zur drahtlosen Kommunikation mit einer hausgerätenexternen bzw. hausgeräteseparaten Einheit ausgebildet ist. Die Kommunikationsschittstelle ist eine Kurzstrecken-Kommunikationsschnittstelle für Funksignale. Durch eine derartige Ausgestaltung wird somit im Hinblick auf die Reichweite und Robustheit sowie die Signalübertragungsmenge eine besondere Vorteilhaftigkeit erzielt. Es wird somit auch ein Kurzstrecken-Funknetz WPAN (Wireless Personal Area Network) ermöglicht.

Die Kurzstrecken-Kommunikationsschnittstelle ist in einem Adaptermodul angeordnet, wobei das Adaptermodul an das Hausgerät reversibel lösbar anbringbar ist. Es ist somit quasi eine Andockstation vorgesehen, an welche dieses Adaptermodul angedockt werden kann. Informationsspezifisch kann dann der Nutzer jeweils das Hausgerät im Hinblick auf seine drahtlose Kommunikation mit der externen Einheit, insbesondere dem Mobiltelefon entsprechend aufrüsten oder situationspezifisch nachrüsten. Immer dann, wenn eine derartige drahtlose Kommunikation gewünscht ist und insbesondere die Informationsübermittlung auf dem Mobiltelefon gewünscht ist, kann dann dieses Adaptermodul an das Hausgerät angedockt werden. Wird es nicht benötigt, kann es abgenommen und verschleißarm sowie verlegsicher aufgeräumt sein.

In besonders vorteilhafter Weise ist die Kurzstrecken-Kommunikationsschnittstelle eine Bluetooth-Schnittstelle. Zu einem ermöglicht dieser Standard in einem derartigen kurzreichweitigen Netzwerk die Übertragung von Funksignalen mit hoher Datenmenge. Darüber hinaus ist die Störanfälligkeit sehr gering.

Vorzugsweise ist die hausgeräteexterne Einheit ein Mobiltelefon. In besonders vorteilhafter Weise kann durch diese Ausgestaltung somit ein System geschaffen werden, bei dem einem Nutzer des Hausgeräts zu jeder Zeit auf ein Mobiltelefon entsprechende Informationen mitgeteilt werden können. Da ein Mobiltelefon üblicherweise von einem Nutzer sehr häufig anbei mitgeführt wird, ist die Informationsmitteilung stets äußerst aktuell von einem Nutzer quasi sofort aufnehmbar. Darüber hinaus ist eine derartige hausgeräteexterne Einheit sehr kompakt und im Hinblick auf den drahtlosen Datenempfang besonders gut ausgerüstet und daher auch wenig störanfällig.

Des Weiteren ist somit ein ohnehin kleines und kompaktes und tragbares Mobiltelefon in seiner Funktionalität und Informationsvermittlung für einen Nutzer erweitert.

Gemäß einem Beispiel, das nicht Teil der Erfindung ist, ist die Kurzstrecken-Kommunikationsschnittstelle in das Hausgerät integriert. Insbesondere ist somit die Kurzstrecken-Kommunikationsschnittstelle dann nicht reversibel lösbar und entnehmbar.

Gemäß der Erfindung ist auch vorgesehen, dass die Kurzstrecken-Kommunikationsschnittstelle in einem Adaptermodul angeordnet ist, wobei das Adaptermodul an das Hausgerät reversibel lösbar anbringbar ist. Es kann somit quasi eine Andockstation vorgesehen sein, an welche dieses Adaptermodul angedockt werden kann. Informationsspezifisch kann dann der Nutzer jeweils das Hausgerät im Hinblick auf seine drahtlose Kommunikation mit der externen Einheit, insbesondere dem Mobiltelefon entsprechend aufrüsten oder situationspezifisch nachrüsten. Immer dann, wenn eine derartige drahtlose Kommunikation gewünscht ist und insbesondere die Informationsübermittlung auf dem Mobiltelefon gewünscht ist, kann dann dieses Adaptermodul an das Hausgerät angedockt werden. Wird es nicht benötigt, kann es abgenommen und verschleißarm sowie verlegsicher aufgeräumt sein.

Die Kurzstrecken-Kommunikationsschnittstelle ist zur Übertragung von Energieverbrauchsdaten des Hausgeräts zur hausgeräteexternen Einheit ausgebildet. Gerade diese spezifischen Informationen können von besonderem Interesse für einen Nutzer sein. Gerade dann, wenn weitere Geräte in einem Haushalt betrieben werden und Energie benötigen, kann in diesem Systemverbund eine Energieverbrauchsmitteilung von einzelnen Geräten, und insbesondere auch dem Hausgerät zum Zubereiten von Lebensmitteln von besonderem Interesse sein. Beispielsweise im Hinblick auf Energieverbrauchsspitzen des Energieversorgungsnetzes des Hauses. Diese können dann entsprechend gesteuert werden, was beispielsweise ebenfalls über das Bildtelefon erfolgen kann. Es kann somit quasi eine zentrale Steuereinheit generiert werden, mit der anhand von diesen Energieverbrauchsdaten entsprechende Gerätesteuerungen durchgeführt werden können.

Vorzugsweise kann vorgesehen sein, dass zu übertragende Energieverbrauchsdaten Informationen dazu pro Zubereitungsvorgang und/oder pro Tag und/oder seit dem ersten Anschluss des Hausgeräts an ein Energieversorgungsnetz umfassen. Die Zeiteinheiten können jedoch auch anderweitig gewählt werden und Energieverbrauchsdaten pro Woche, pro Monat oder pro Jahr umfassen.

Vorzugsweise umfassen zu übertragende Daten auch Energieverbrauchsdaten pro Funktionseinheit des Hausgeräts und/oder des gesamten Hausgeräts. Funktionseinheiten sind vorzugsweise diese Teileinheiten des Hausgeräts, welche die grundlegende primäre Betriebsfunktion des Hausgeräts gewährleisten.

Vorzugsweise ist das Hausgerät ein Kochfeld und eine Funktionseinheit ist eine Kochzone. Diese umfasst dann eine zugeordnete Heizeinrichtung. Vorzugsweise ist die Kurzstrecken-Kommunikationsschnittstelle zur Übertragung von Informationen über die Nutzungsdauer einer Funktionseinheit und/oder von Grundbetriebseinstellungen des Hausgeräts zur hausgeräteexternen Einheit ausgebildet.

Zusätzlich kann auch vorgesehen sein, dass darüber hinaus auch weitere Zusatzinformationen, wie kundendienstrelevante Daten über Fehler des Geräts oder sonstige Diagnoseinformationen bereitgestellt werden. Dadurch kann eine kabellose Prüfung in der Fertigung des Geräts ermöglicht werden.

Insbesondere kann vorgesehen sein, dass diese funktionelle Erweiterung des Hausgeräts im Hinblick auf die drahtlose Kommunikation mit einem Mobiltelefon auch einfach über ein Software-Download aus dem Internet adaptierbar ist.

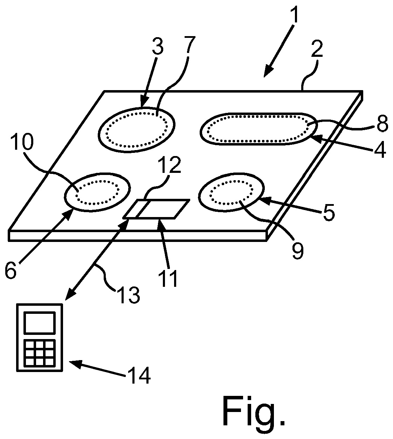

Ein Ausführungsbeispiel der Erfindung wird nachfolgend anhand einer schematischen Zeichnung näher erläutert. Die einzige Figur zeigt eine perspektivische Darstellung eines als Kochfeld 1 ausgebildeten Hausgeräts zum Zubereiten von Lebensmitteln. Das Kochfeld 1 umfasst eine Kochfeldplatte 2, die beispielsweise aus Glas oder Glaskeramik ausgebildet sein kann. Auf der Kochfeldplatte 2 sind im Ausführungsbeispiel vier Kochzonen 2, 4, 5 und 6 ausgebildet. Auf diesen können Zubereitungsgefäße wie Pfannen oder Töpfe oder dergleichen aufgestellt werden. Die Bereiche der Kochzonen 3 bis 6 können durch jeweils darunter angeordnete Heizeinrichtungen 7, 8, 9 und 10 beheizt werden, so dass die Zubereitung von Gargut in den Zubereitungsgefäßen ermöglicht ist.

Das Kochfeld 1 umfasst darüber hinaus auch noch eine Bedien- und/oder Anzeigeeinheit 11. Diese kann eine Mehrzahl von Bedienelementen und von Anzeigeflächen aufweisen. Es können in diesem Zusammenhang insbesondere auch berührungssensitive Bedienelemente vorgesehen sein. Lediglich beispielhaft ist im Hinblick auf Ausgestaltung und Ort im Ausführungsbeispiel gemäß der Figur eine Kurzstrecken-Kommunikationsschnittstelle in Form einer Bluetooth-Schnittstelle 12 ausgebildet. Über diese Schnittstelle 12 können bidirektional Daten zwischen dem Kochfeld 1 und einer hausgeräteexternen Einheit in Form des Mobiltelefons 14 über einen Kurzstrecken-Funkkanal 13 ausgetauscht werden. Es ist somit ein Kurzstrecken-Funknetz vorhanden. Insbesondere werden in diesem Zusammenhang Daten über den Energieverbrauch des gesamten Kochfelds 1 und/oder von Funktionseinheiten in Form der Kochzonen 3 bis 6 oder zumindest einer davon von dem Kochfeld 1 über die Schnittstelle 12 an das Mobiltelefon 14 übertragen. Als weitere Daten können auch die Nutzungsdauer einer Funktionseinheit und/oder von Grundbetriebseinstellungen des Kochfelds 1 zum Mobiltelefon 14 übertragen werden. Ebenso können aufgrund der Bidirektionalität auch Daten und Informationen von dem Mobiltelefon 14 zum Kochfeld 1 übertragen werden. Insbesondere können zumindest Steuerungen mit dem Mobiltelefon 14 vorgenommen werden, so dass das Mobiltelefon 14 auch als Steuereinheit für das Kochfeld 1 dienen kann. Ebenso können Informationen, Fehlerdiagnose- und -analyseinformationen drahtlos auf das Mobiltelefon 14 übertragen werden.

Möglich ist auch, dass als hausgeräteexterne Einheit ein Laptop oder sonstiger tragbarer Computer verwendet werden kann.

### Bezugszeichenliste

- 1: Kochfeld
- 2: Kochfeldplatte
- 3, 4, 5, 6: Kochzonen
- 7, 8, 9, 10: Heizeinrichtungen
- 11: Bedien- und/oder Anzeigeneinheit
- 12: Bluetooth-Schnittstelle
- 13: Funkkanal
- 14: Mobiltelefon

## Patentansprüche

1. Hausgerät zum Zubereiten von Lebensmitteln, Adaptermodul und hausgeräteexterne Einheit (14) mit einer Kommunikationsschnittstelle (12) des Hausgeräts (1), mittels welcher dieses zur drahtlosen Kommunikation mit der hausgerätexternen Einheit (14) ausgebildet ist, und die Kommunikationsschnittstelle (12) eine Kurzstrecken-Kommunikationsschnittstelle (12) für Funksignale ist, wobei die Kurzstrecken-Kommunikationsschnittstelle (12) in dem Adaptermodul des Hausgeräts (1) angeordnet ist, wobei das Adaptermodul an das Hausgerät (1) reversibel lösbar anbringbar ist, um das Hausgerät informationsspezifisch durch einen Nutzer im Hinblick auf die drahtlose Kommunikation mit der hausgerätexternen Einheit (14) aufzurüsten oder situationsspezifisch nachzurüsten, **dadurch gekennzeichnet, dass** die Kurzstrecken-Kommunikationsschnittstelle (12) Energieverbrauchsdaten des Hausgeräts (1) zur hausgeräteexternen Einheit (14) überträgt.

2. Hausgerät nach Anspruch 1, **dadurch gekennzeichnet, dass** die Kurzstrecken-Kommunikationsschnittstelle eine Bluetooth-Schnittstelle (12) ist.

3. Hausgerät nach Anspruch 1 oder 2, **dadurch gekennzeichnet, dass** die hausgeräteexterne Einheit ein Mobiltelefon (14) ist.

4. Hausgerät nach einem der vorhergehenden Ansprüche, **dadurch gekennzeichnet, dass** zu übertragende Daten Energieverbrauchsdaten pro Zubereitungsvorgang und/oder pro Tag und/oder seit dem ersten Anschluss des Hausgeräts an ein Energieversorgungsnetz umfassen.

5. Hausgerät nach einem der vorhergehenden Ansprüche, **dadurch gekennzeichnet, dass** zu übertragende Daten Energieverbrauchsdaten pro Funktionseinheit (3 bis 10) des Hausgeräts (1) und/oder des gesamten Hausgeräts (1) umfassen.

6. Hausgerät nach einem der vorhergehenden Ansprüche, **dadurch gekennzeichnet, dass** die Kurzstrecken-Kommunikationsschnittstelle (12) zur Übertragung von Informationen über die Nutzungsdauer einer Funktionseinheit (3 bis 10) und/oder von Grundbetriebseinstellungen des Hausgeräts (1) zur hausgeräteexternen Einheit (14) ausgebildet ist.

7. Hausgerät nach einem der vorhergehenden Ansprüche, **dadurch gekennzeichnet, dass** es ein Kochfeld (1) ist und eine Funktionseinheit eine Kochzone (3 bis 10) ist.

## Claims

1. Household appliance for preparing food, adapter module and unit (14) external to the household appliance with a communication interface (12) of the household appliance (1), by means of which this is embodied for the wireless communication with the unit (14) external to the household appliance, and the communication interface (12) is a short distance communication interface (12) for radio signals, wherein the short distance communication interface (12) is arranged in the adapter module of the household appliance (1), wherein the adapter module can be attached to the household appliance (1) in a reversibly detachable manner in order to set up, or retrofit in a situation-specific manner, the household appliance in an information-specific manner by a user with respect to the wireless communication with the unit (14) external to the housing appliance, **characterised in that** the short distance communication interface (12) transmits energy consumption data of the household appliance (1) to the unit (14) external to the household appliance.

2. Household appliance according to claim 1, **characterised in that** the short distance communication interface is a Bluetooth interface (12).

3. Household appliance according to claim 1 or 2, **characterised in that** the unit external to the household appliance is a mobile telephone (14).

4. Household appliance according to one of the preceding claims, **characterised in that** data to be transmitted comprises energy consumption data per preparation process and/or per day and/or since the first connection of the household appliance to a power supply network.

5. Household appliance according to one of the preceding claims, **characterised in that** data to be transmitted comprises energy consumption data per functional unit (3 to 10) of the household appliance (1) and/or the entire household appliance (1).

6. Household appliance according to one of the preceding claims, **characterised in that** the short distance communication interface (12) is embodied to transmit information about the useful life of a functional unit (3 to 10) and/or basic operator settings of the household appliance (1) to the unit (14) external to the household appliance.

7. Household appliance according to one of the preceding claims, **characterised in that** it is a hob (1) and a functional unit is a cooking zone (3 to 10).

## Revendications

1. Appareil ménager servant à préparer des aliments, module d'adaptateur et unité externe à l'appareil (14), lequel appareil ménager (1) comprend une interface de communication (12) permettant à celui-ci de communiquer sans fil avec l'unité externe à l'appareil ménager (14), laquelle interface de communication (12) est une interface de communication à courte portée (12) pour des signaux radio, dans lequel l'interface de communication à courte portée (12) est disposée dans le module d'adaptateur de l'appareil ménager (1), et le module d'adaptateur peut être monté sur l'appareil ménager (1) de façon amovible et réversible pour moderniser ou réadapter selon la situation, en matière d'informations, l'appareil ménager par un utilisateur en ce qui concerne sa communication sans fil avec l'unité externe (14) à l'appareil ménager,
**caractérisé en ce que** l'interface de communication à courte portée (12) transmet des données de consommation d'énergie de l'appareil ménager (1) à l'unité externe à l'appareil (14).

2. Appareil ménager selon la revendication 1, **caractérisé en ce que** l'interface de communication à courte portée est une interface de communication Bluetooth (12).

3. Appareil ménager selon la revendication 1 ou 2, **caractérisé en ce que** l'unité externe à l'appareil ménager est un téléphone mobile (14).

4. Appareil ménager selon l'une des revendications précédentes, **caractérisé en ce que** des données à transmettre comprennent des données de consommation d'énergie par opération de préparation et/ou par jour et/ou depuis le premier raccordement de l'appareil ménager à un réseau de distribution d'énergie.

5. Appareil ménager selon l'une des revendications précédentes, **caractérisé en ce que** des données à transmettre comprennent des données de consommation d'énergie par unité fonctionnelle (3 à 10) de l'appareil ménager (1) et/ou de l'appareil ménager entier (1).

6. Appareil ménager selon l'une des revendications précédentes, **caractérisé en ce que** l'interface de communication à courte portée (12) est configurée pour transmettre des informations sur la durée d'utilisation d'une unité fonctionnelle (3 à 10) et/ou des réglages de fonctionnement de base de l'appareil ménager (1) à l'unité externe (14) à l'appareil ménager.

7. Appareil ménager selon l'une des revendications précédentes, **caractérisé en ce que** celui-ci est une table de cuisson (1) et une unité fonctionnelle est une zone de cuisson (3 à 10).
